# EUROPÄISCHE PATENTSCHRIFT

(11) **EP 2 805 183 B1**
(45) Veröffentlichungstag und Bekanntmachung des Hinweises auf die Patenterteilung: **06.03.2019**
(21) Anmeldenummer: 12805962.3
(22) Anmeldetag: 28.11.2012
(51) Int. Cl.: G01S 11/12, G01S 17/93, B60W 50/14, G06T 19/00

(54) **VERFAHREN UND VORRICHTUNG ZUM VISUALISIEREN DER UMGEBUNG EINES FAHRZEUGS**
METHOD AND DEVICE FOR VISUALIZING THE SURROUNDINGS OF A VEHICLE
PROCÉDÉ ET DISPOSITIF DE VISUALISATION DE L'ENVIRONNEMENT D'UN VÉHICULE

(30) Priorität: 19.01.2012 DE 102012200731
(43) Veröffentlichungstag der Anmeldung: 26.11.2014
(73) Patentinhaber: Robert Bosch GmbH, 70442 Stuttgart (DE)
(72) Erfinder: HECKEL, Joerg, 71277 Rutesheim (DE); MARBERGER, Claus, 71263 Weil Der Stadt (DE); MIELENZ, Holger, 73760 Ostfildern (DE)
(86) Internationale Anmeldenummer: PCT/EP2012/073835
(87) Internationale Veröffentlichungsnummer: WO 2013/107548

(56) Entgegenhaltungen:
- EP-A1- 1 179 958
- EP-A1- 1 462 762
- EP-A2- 1 291 668
- WO-A1-2011/030698
- WO-A1-2011/158609
- US-A1- 2004 105 579

## Beschreibung

### Stand der Technik

Die vorliegende Erfindung betrifft eine erweiterte Anzeige der Umgebung eines Fahrzeugs. Bei diesem Augmented-Reality genannten Konzept werden ortsbezogene Zusatzinformationen in die vom Betrachter wahrgenommene Realität eingeblendet. In einem Fahrzeug wird dies meist dadurch realisiert, dass eine Kamera ein Echtzeitvideobild der Fahrzeugumgebung erzeugt, das dem Fahrer über eine entsprechende Ausgabevorrichtung gezeigt wird. In diesem Bild werden dann Zusatzinformationen zur Unterstützung des Fahrers angezeigt. Dies kann beispielsweise die Visualisierung des voraussichtlichen Fahrweges bei aktuellem Lenkeinschlag oder das Hervorheben eines Hindernisses sein. Besonders bei Engstellen oder bei Einparkvorgängen kann ein solches System sehr nützlich sein.
Es besteht jedoch aufgrund des begrenzten Öffnungswinkels der Kamera (typischerweise kleiner als 50°) das Problem, dass nur ein begrenzter Bereich der Umgebung des Fahrzeugs visualisiert werden kann. Vor allem der Nahbereich des Fahrzeugs kann mit einem solchen System oft nicht erfasst werden. Ein akkurates Umgebungsmodell des Fahrzeugs im Nahbereich ist jedoch erstrebenswert, um dem Fahrer auch hier Informationen mitteilen zu können.

Aus dem Stand der Technik ist die DE 10 2008 036 009 A1 bekannt, die ein Verfahren zum Vermessen des Umfeldes eines Kraftfahrzeugs beschreibt. Mittels mehrerer nicht näher spezifizierter Sensoren wird der Nahbereich eines Fahrzeugs erfasst und aus den gewonnenen Daten eine Umfeldkarte generiert, in dem sich das Fahrzeug virtuell bewegt. Als Visualisierung wird die Anzeige
des generierten Raumes zum Beispiel aus der Vogelperspektive vorgeschlagen. Weiterhin können darin wichtige Informationen, wie beispielsweise vorstehende Kollisionen oder die Anzeige des Fahrschlauchs visualisiert werden. Jedoch erfolgt keine Visualisierung des Fernbereichs der Umgebung des Fahrzeugs.

Das Dokument DE 10 2009 005 566 A1 beschreibt ein Verfahren zum Kombinieren von Signalen aus einer Videokamera mit Signalen von Nahbereichssensoren, wie beispielsweise Ultraschallsensoren. Dazu werden mit Hilfe der Videokamera Objekte in der Umgebung des Fahrzeugs detektiert, die mit den Nachbereichssensoren vermessen werden können. Somit kann ein Objekt in eine dreidimensionale Umfeldskarte des Fahrzeugs eingetragen werden. Diese Karte kann anschließend für verschiedene Applikationen, zum Beispiel der Unterstützung des Fahrers beim Einparken, verwendet werden. Jedoch wird in diesem Dokument nicht näher auf die Visualisierung eingegangen.

Die DE 10 2009 005 505 A1 beschreibt ein Verfahren zum Erzeugen eines Umgebungsabbildes des Fahrzeugs aus einer virtuellen Kameraposition, wobei die Abbildung einer Kameraperspektive auf die virtuelle Kameraposition umgerechnet wird. Dazu wird mit mehreren Kameras der Nahbereich des Fahrzeugs erfasst und anschließend mit einem 3D-Modell kombiniert, um somit perspektivische Verzerrungen der Kamera zu glätten. Das 3D-Modell wird ebenfalls mit den genannten Kameras gewonnen, indem auf das Stereo-from-Motion-Prinzip zurückgegriffen wird. Damit kann dem Fahrer ein Videobild des gesamten Nahbereichs seines Fahrzeugs, zum Beispiel aus der Vogelperspektive, gezeigt werden.

Der genannte Stand der Technik weist jedoch den Nachteil auf, dass lediglich der Nahbereich des Fahrzeugs visualisiert wird, während der Fernbereich nicht beachtet wird. Weiterhin wird, wie in den ersten beiden Fällen, dem Fahrer kein Videobild der Umgebung gezeigt. Dies ist jedoch wünschenswert, da es viele Informationen enthält und für den Fahrer intuitiv verständlicher ist, als ein synthetisches Modell. Das dritte Modell offenbart jedoch die Verwendung von mehreren Kameras, was den Fertigungsaufwand und die Kosten des Fahrzeugs erhöht. Auch diskutiert keine der zitierten Druckschriften die Möglichkeit, einen perspektivisch kontinuierlichen Übergang zwischen künstlich gerenderten Umgebungsmodellen und Bilddaten eines optischen Umfeldsensors vorteilhaft einzusetzen.

Ein Verfahren gemäß dem Oberbegriff des Anspruchs 1 und eine Vorrichtung gemäß dem Oberbegriff des Anspruchs 7 ist aus der EP 1462 762 A1 bekannt. Weitere Verfahren zum Visualisieren der Umgebung eines Fahrzeugs sind aus der EP 1 291 668 A2, der US 2004/0105579 A1 und aus der EP 1179 958 A1 bekannt.

Die Schrift WO 2011/158609 A1 offenbart eine Fahrassistenzvorrichtung, wobei die Fahrassistenzvorrichtung ein Kamerabild der Umgebung mittels einer Kamera erfasst. Das erfasste Kamerabild wird in ein Umgebungsmodell aus der Vogelperspektive konvertiert.

Die Schrift WO 2011/030698 A1 offenbart eine Anzeige einer Umgebung eines Fahrzeugs mittels mehrerer Ansichten.

### Offenbarung der Erfindung

Das erfindungsgemäße Verfahren zum Visualisieren der Fahrzeugumgebung begegnet den Nachteilen des Standes der Technik durch die Kombination der Merkmale aus dem unabhängigen Anspruch 1. Um dem Fahrer des Fahrzeugs reichhaltige Umgebungsinformationen intuitiv und übersichtlich darzustellen, wird eine zweigeteilte Anzeige aus synthetisch erzeugtem Umgebungsmodell und Echtzeitvideobild generiert. Um das Umgebungsmodell zu erzeugen, wird zunächst ein aktueller Abstand zwischen Fahrzeug und Hindernissen in der Umgebung erfasst. Gleichzeitig wird eine aktuelle Position des Fahrzeugs bestimmt, die zusammen mit den Abstandsinformationen zwischengespeichert wird. Aus mehreren gespeicherten Positions- und Abstandsdaten kann nun ein Modell der Umgebung des Fahrzeugs berechnet werden, was je nach Art der verwendeten Abstandssensoren, ein zweidimensionales oder dreidimensionales Modell sein kann. Der Vorteil dieses Umgebungsmodells ist der, dass es aus verschiedenen virtuellen Positionen betrachtet werden kann. Wird eine bestimmte virtuelle Betrachterposition festgelegt (zum Beispiel vom Fahrer), so wird eine virtuelle Ansicht des Umgebungsmodells aus dieser Betrachterposition berechnet. Auf diese Weise ist es beispielsweise möglich, eine Top-view-Ansicht der Umgebung zu erzeugen. Zusätzlich zu dem Umgebungsmodell wird ein Teil der Umgebung mittels mindestens einer, bevorzugt mittels genau einer, Videokamera erfasst. Die so erzeugte Videodarstellung wird an passender Stelle in die virtuelle Ansicht integriert, so dass dem Fahrer ein umfassendes Bild der Umgebung seines Fahrzeugs gezeigt werden kann: Im Erfassungsbereich der Videokamera sieht er ein Echtzeitvideobild der Umgebung, während er außerhalb des Erfassungsbereichs der Videokamera das synthetisch erzeugte Umgebungsmodell sieht. Damit stehen dem Fahrer zusätzlich zu der Videodarstellung der Umgebung auch Informationen über Hindernisse zur Verfügung, die gerade nicht im Erfassungsbereich der Videokamera liegen. Insgesamt kann mit dem erfindungsgemäßen Verfahren ein größerer Ausschnitt der Umwelt dargestellt werden, als von der Videokamera erfasst wird. Damit ist es möglich, auch Videosensoren zu verwenden, die einen geringen Öffnungswinkel aufweisen. Weiterhin ist es vorteilhaft, das erstellte dreidimensionale Umfeldsmodell zur Glättung perspektivischer Verzerrungen einzusetzen.

Insbesondere umfasst die virtuelle Ansicht eine zweigeteilte Darstellung, wonach auf Höhe des Übergangs zwischen Motorraum-Fahrgastzelle ein künstlicher Horizont gelegt wird, der eine Aufteilung in verschiedene Ansichten ermöglicht. So kann beispielsweise der künstliche Horizont das Bild von einer vorausblickenden Kamera von einer synthetisch erzeugten Vogelperspektive abgrenzen.

Die Unteransprüche zeigen bevorzugte Weiterbildungen der Erfindung.

In vorteilhafter Weise wird der Abstand zwischen Fahrzeug und Hindernissen mittels optischen Sensoren bestimmt. Diese Sensoren können dabei entweder passive Sensoren (Mono- und Stereo-Video) oder aktive Sensorsysteme (Laserscanner, Laserimager, PMD (Photonic Mixing Device, optischer Sensor nach dem Time-of-Flight Verfahren), Flush-Lidar) sein.

Es ist weiterhin vorteilhaft, wenn die Abstandsdaten zu Hindernissen in der Umgebung des Fahrzeugs aus den Signalen der Videokamera gewonnen werden. Dies bedeutet, dass die Videokamera zwei Aufgaben erfüllen muss. Zum einen dient sie als Abstandssensor (z.B. nach dem Structure-from-Motion Verfahren oder indem die Videokamera eine Stereokamera ist), zum anderen als Lieferant für das anzuzeigende Videosignal. Daher wird neben der Videokamera keine weitere Sensorik benötigt, um das Umgebungsmodell zu bestimmen.

Bevorzugt wird die Position des Fahrzeugs als eine absolute Position oder als eine zu einer bereits gespeicherten Position relative Position gemessen. Um eine relative Position zu bestimmen, bietet sich die Odometrie an, was den Positionsbestimmungsvorgang sehr einfach macht. Sollte eine absolute Position gemessen werden, so ist auf eine hinreichende Genauigkeit des Positionsbestimmungsverfahrens zu achten. Beispielsweise kann hier ein Differential-GPS verwendet werden.

In einer weiteren bevorzugten Ausführungsform wird die virtuelle Betrachterposition des Umgebungsmodells vom Fahrer des Fahrzeugs festgelegt. Dieser kann somit die Visualisierung der Hindernisse durch Variation der Betrachtungsweisen und Perspektiven in der Umgebung des Fahrzeugs individuell gestalten. Alternativ kann die virtuelle Betrachterposition von einer Recheneinheit automatisch festgelegt werden und in der Anzeigevorrichtung dargestellt werden. Anhand der gewählten virtuellen Betrachterposition wird schließlich die virtuelle Ansicht des Umgebungsmodells berechnet, sowie die Videodarstellung entsprechend angepasst, um sie nahtlos in die virtuelle Ansicht einzufügen.

Außerdem ist es vorteilhaft, wenn aktuelle Fahrparameter in die virtuelle Ansicht integriert werden. Dies kann beispielsweise der Weg zu einem Parkplatz oder ein drohendes Kollisionsobjekt sein, wobei es irrelevant ist, ob dieses Objekt oder der Weg aktuell von der Videokamera erfasst werden. Die Visualisierung des synthetischen Umgebungsmodells ermöglicht auch die Warnung vor Objekten außerhalb des Erfassungsbereichs der Videokamera. Da die Visualisierung des Umgebungsmodells und die Videodarstellung über ein gemeinsames Koordinatensystem verfügen, können solche Zusatzinformationen auch nahtlos über beide Bereiche gelegt werden. Auf diese Weise kann zum Beispiel auch ein erkannter Pfosten während eines Einparkvorgangs "überwacht" werden, selbst wenn er den sichtbaren Bereich der Kamera verlassen hat.

Zusätzlich betrifft die Erfindung eine Vorrichtung zum Visualisieren der Fahrzeugumgebung mit den Merkmalen des Anspruch 7. Diese umfasst mindestens einen Sensor zum Bestimmen eines Abstands des Fahrzeugs zu Hindernissen sowie mindestens einen Sensor zum Bestimmen einer aktuellen Position des Fahrzeugs. Weiterhin ist eine Speichervorrichtung vorhanden, in der Positionsdaten und Abstandsdaten gespeichert werden. Außerdem wird eine Videokamera verwendet, die zumindest einen Teil der Umgebung erfasst und diese Daten an eine Rechenvorrichtung weiterleitet. Auf Basis der gespeicherten Positionsdaten des Fahrzeugs und Abstandsdaten der Hindernisse sowie den Signalen der Videokamera generiert die Rechenvorrichtung eine Visualisierung der Umgebung, die auf einer Ausgabevorrichtung dem Fahrer angezeigt wird. Dazu berechnet die Rechenvorrichtung ein Umgebungsmodell aus den gespeicherten Positions- und Abstandsdaten. Wird eine virtuelle Betrachterposition gewählt, so bestimmt die Rechenvorrichtung weiter eine virtuelle Ansicht dieses Umgebungsmodells aus der gewählten virtuellen Betrachterposition. Schließlich integriert die Rechenvorrichtung die Signale der Videokamera in die virtuelle Ansicht. Daher kann mit der erfindungsgemäßen Vorrichtung das erfindungsgemäße Verfahren ideal durchgeführt werden.

In vorteilhafter Weise handelt es sich bei dem mindestens einen Sensor zur Bestimmung des Abstands zwischen Fahrzeug und Hindernissen entweder um einen passiven optischen Sensor (Mono- und Stereo-Video) oder um ein aktives optisches Sensorsystem (Laserscanner, Laserimager, PMD, Flush-Lidar) arbeitet.

Bevorzugt umfasst der Sensor zum Bestimmen eines Abstands des Fahrzeugs zu Hindernissen die Videokamera, die somit zwei Aufgaben erfüllen muss. Zum einen liefert sie Abstandsinformationen zu Hindernissen in der Umgebung des Fahrzeugs (z.B. nach dem Structure-from-Motion Verfahren oder dem Stereo-Video-Verfahren), zum anderen liefert sie das anzuzeigende Videosignal. Dadurch wird keine separate Abstandssensorik benötigt, was den Aufbau der erfindungsgemäßen Vorrichtung deutlich vereinfacht.

Außerdem wird ein Fahrzeug offenbart, das eine erfindungsgemäße Vorrichtung umfasst bzw. derart eingerichtet ist, ein erfindungsgemäßes Verfahren auszuführen.

Weiterhin ist es vorteilhaft, wenn die von der Kamera aufgenommene Videodarstellung für die Displaydarstellung bearbeitet wird. Auf diese Weise kann es dem Blickwinkel, aus dem die Displaydarstellung die virtuelle Umgebung zeigt, angepasst werden, so dass keine perspektivischen Störungen entstehen.

### Kurze Beschreibung der Zeichnungen

Nachfolgend werden Ausführungsbeispiele der Erfindung unter Bezugnahme auf die begleitende Zeichnung im Detail beschrieben. In der Zeichnung ist:
- Figur 1: eine Darstellung der Visualisierung der Umgebung eines Fahrzeugs gemäß dem Stand der Technik,
- Figur 2: eine Darstellung einer ersten Visualisierungsvariante der Umgebung eines Fahrzeuges gemäß einer ersten Ausführungsform der Erfindung,
- Figur 3: eine Darstellung einer zweiten Visualisierungsvariante der Umgebung eines Fahrzeuges gemäß einer ersten Ausführungsform der Erfindung,
- Figur 4: die Visualisierung der Fahrzeugumgebung bei Durchfahrt einer engen Gasse zu einem ersten Zeitpunkt gemäß einer zweiten Ausführungsform der Erfindung und
- Figur 5: die Visualisierung der Fahrzeugumgebung bei Durchfahrt einer engen Gasse zu einem zweiten Zeitpunkt gemäß der zweiten Ausführungsform der Erfindung.

### Ausführungsformen der Erfindung

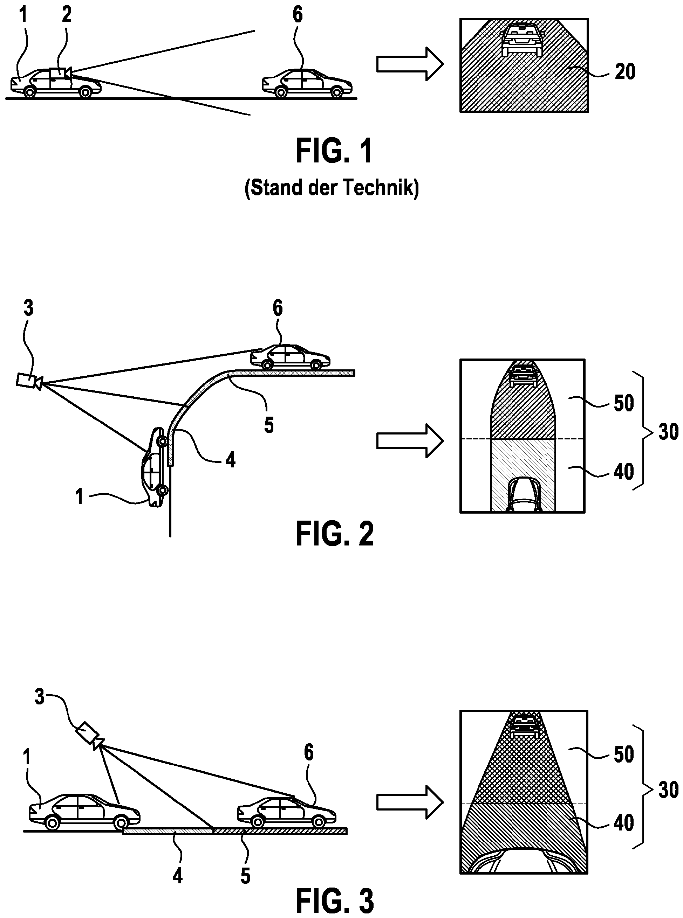

Figur 1 zeigt eine übliche, perspektivische Videodarstellung 20 einer durch eine Kamera 2 erfassten Umgebung mit eingeschränktem Blickwinkel.

Die Figuren 2 und 3 verdeutlichen eine erste Ausführungsform der Erfindung. Es wird ein Fahrzeug 1 betrachtet, das mit einer Kamera 2 ausgestattet ist. Erfindungsgemäß erfüllt die Kamera zwei Funktionen: zum einen kann lediglich eine Videodarstellung 20 der Umgebung angezeigt werden, zum anderen kann mittels des Stereo-from-Motion-Verfahrens der Abstand zu Hindernissen 6 in der Umgebung des Fahrzeugs bestimmt werden. Daher dient die Kamera auch als Abstandssensor, so dass ein dreidimensionales Umgebungsmodell des Fahrzeugs berechnet werden kann. Das Umgebungsmodell wiederum ermöglicht es, eine virtuelle Betrachterposition 3 (vgl. Figuren 2 und 3) festzulegen, aus der die Umgebung betrachtet werden soll. Daher ist es zum Beispiel möglich, eine Displaydarstellung 30 zu erzeugen, die einen kontinuierlichen Übergang aus einer Top-View-Perspektive (Ansicht senkrecht von oben) in die Fahrerperspektive anzeigt (siehe Figur 2). Eine andere Möglichkeit ist die zentralperspektivische Darstellung von Nah- und Fernbereich aus der Vogelperspektive (siehe Figur 3). Ein erster Teil 40 der Displaydarstellung basiert dabei auf einer Rekonstruktion aus dem Umgebungsmodell. Dies entspricht dem Bereich 4 der Umgebung, der von der Kamera 2 nicht einsehbar ist. Ein zweiter Teil 50 der Displaydarstellung basiert auf den Signalen der Videokamera. Dies entspricht dem Bereich 5 der Umgebung, der von der Kamera einsehbar ist. In beiden genannten Perspektiven wird die Videodarstellung 20 der Umgebung entsprechend transformiert, so dass sie nahtlos und ohne perspektivische Verzerrung an die aus dem Umgebungsmodell berechnete Ansicht angefügt werden kann.

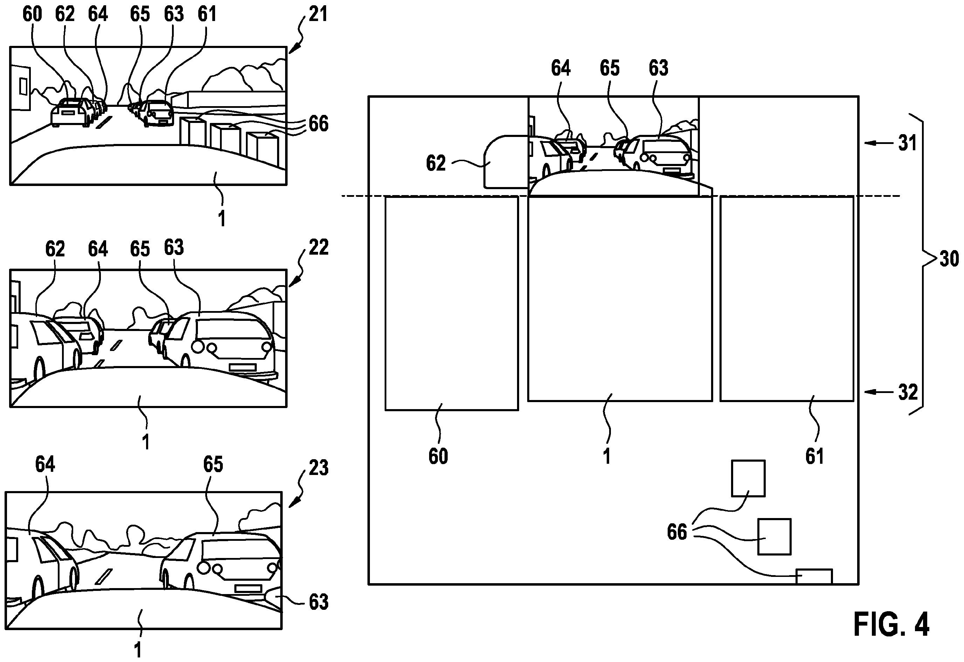

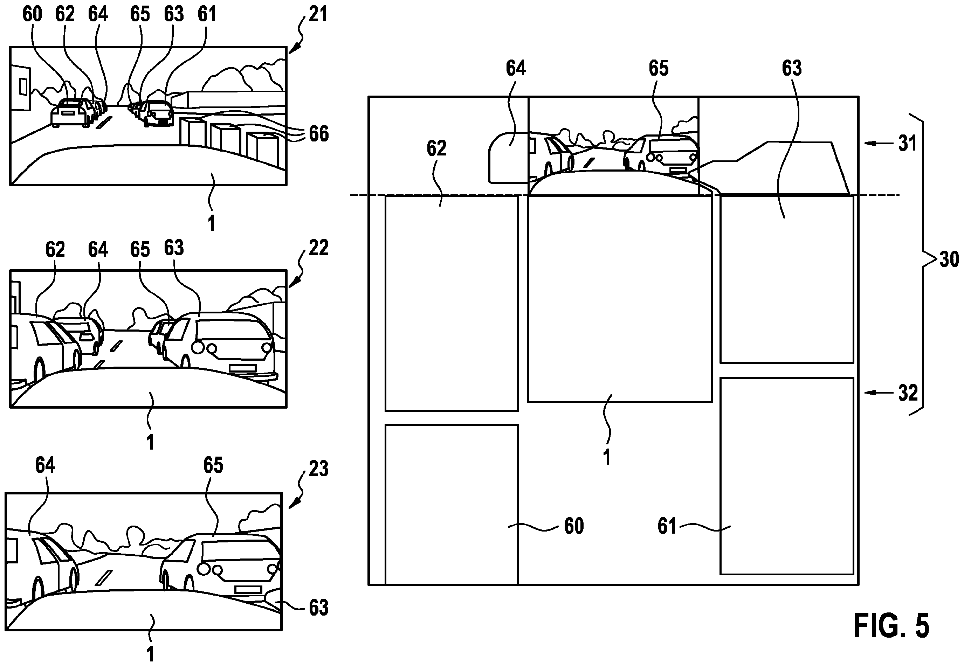

Die Figuren 4 und 5 zeigen ein Fahrzeug 1, das durch eine enge Gasse fährt. Diese Gasse wird durch drei Fahrzeuge 60, 62 und 64 auf der linken Seite und durch drei Fahrzeuge 61, 63 und 65 auf der rechten Seite sowie durch einige weitere Container 66 gebildet. Während der Durchfahrt des Fahrzeugs 1 wird die Umgebung nach dem erfindungsgemäßen Verfahren gemäß einer zweiten Ausführungsform visualisiert. Der Gesamtvorgang wird beispielhaft anhand von drei Bildern, einem ersten Bild 21, einem zweiten Bild 22 und einem dritten Bild 23 erklärt, die von der Kamera 2 zu unterschiedlichen Zeitpunkten aufgenommen wurden. Die Displaydarstellung 30, die dem Fahrer gezeigt wird, ist auch hier zweigeteilt. Im oberen Bereich 31 wird eine Perspektive dargestellt, wie sie auch der Fahrer sieht. Hier wird die Videodarstellung der Kamera 2 integriert, die dafür nicht weiter transformiert werden muss. Der untere Bereich 32 zeigt die Umgebung aus der Top-View-Perspektive. Daher entspricht der obere Bereich 31 der Visualisierung des Fernbereichs des Fahrzeugs 1, während der untere Bereich 32 der Visualisierung des Nahbereichs des Fahrzeugs entspricht.

In Figur 4 befindet sich das Fahrzeug an der Position, in der die Kamera 2 das zweite Bild 22 aufnimmt. An dieser Stelle sind das hintere linke Fahrzeug 60 und das hintere rechte Fahrzeug 61 der Gasse nicht mehr einsehbar. Erfindungsgemäß wird die Kamera 2 jedoch auch zur Bestimmung eines Umgebungsmodells unter Ausnutzung des Stereo-from-Motion-Prinzips verwendet oder unter der Verwendung eine Stereo-Videokamera betrieben, so dass die Position der beiden Fahrzeuge 60 und 61 relativ zu dem eigenen Fahrzeug 1 bekannt ist. Es ist daher problemlos möglich, die Position der beiden Fahrzeuge 60 und 61 bezüglich des eigenen Fahrzeuges aus dem Umgebungsmodell zu ermitteln und in der Displaydarstellung 30 im unteren Bereich 32 (Top-View-Perspektive) anzuzeigen. Das Gleiche gilt analog für hinter dem Fahrzeug liegende Container 66. Diese werden immer noch dargestellt, obwohl das Fahrzeug 1 bereits an selbigen vorbeigefahren ist. Erfindungsgemäß ist es dennoch möglich, den Fahrer vor diesen Containern 66 zu warnen, da deren Position relativ zum Fahrzeug bekannt ist, obwohl seit längerer Zeit von der Videokamera 2 nicht mehr erfasst wurden.

Die Videodarstellung der Kamera 2 wird in die Displaydarstellung 30 im oberen Bereich 31 (Fahrerperspektive) integriert. Diese wird nahtlos in die übrige Anzeige eingefügt und kann um zusätzliche Umgebungsinformationen aus dem Umgebungsmodell erweitert werden. So ist beispielsweise das Fahrzeug 1 bereits so weit an das mittlere linke Fahrzeug 62 der Gasse herangefahren, dass dieses nicht mehr vollständig von der Kamera 2 erfasst werden kann. Jedoch ist aus dem Umgebungsmodell sowohl die Position des mittleren linken Fahrzeugs 62 bezüglich zum eigenen Fahrzeug 1 als auch dessen Abmessung bekannt. Daher kann das im oberen Bereich 31 der Displaydarstellung 30 gezeigte Videobild erweitert werden, indem die aus dem Umgebungsmodell rekonstruierten Umrisse des mittleren linken Fahrzeugs 62 die Videodarstellung vervollständigen.

In Figur 3 wird ein zweiter Zeitschritt der Gassendurchfahrt dargestellt, zu dem die Kamera 2 das dritte Bild 23 aufnimmt. Nicht mehr relevante Objekte, wie die oben genannten Container 66, werden nun nicht mehr dargestellt. Außerdem wird anhand des mittleren rechten Fahrzeugs 63 deutlich, wie Objekte aus dem oberen Bereich 31 der Displaydarstellung 30 in den unteren Bereich 32 wechseln können. Ein solcher Wechsel entspricht dem Übergang vom Fernbereich (Fahrerperspektive bzw. oberer Bereich 31) in den Nahbereich (Top-View-Perspektive bzw. unterer Bereich 32) und findet zu dem Zeitpunkt statt, zu dem das Fahrzeug 1 an dem entsprechendem Objekt vorbeifährt. Der kontinuierliche Übergang in der Darstellung bewirkt schließlich eine für den Fahrer des Fahrzeugs intuitiv verständliche Visualisierung der Umgebung seines Fahrzeugs.

## Patentansprüche

1. Verfahren zum Visualisieren einer Umgebung eines Fahrzeuges (1), umfassend die folgenden Schritte:
- Bestimmen und Speichern eines aktuellen Abstands zwischen Fahrzeug (1) und vorhandenen Hindernissen (6, 60, 61, 62, 63, 64, 65, 66) in der Umgebung des Fahrzeugs mittels mindestens einem Sensor,
- Bestimmen und Speichern einer aktuellen Position des Fahrzeuges,
- Berechnen eines zumindest zweidimensionalen Umgebungsmodells aus den gespeicherten Daten,
- Berechnen einer Displaydarstellung (30) des Umgebungsmodells aus einer gewählten virtuellen Betrachterposition (3),
- Aufnehmen einer Videodarstellung von zumindest einem Teil der Umgebung mittels mindestens einer Videokamera (2) und Integrieren der Videodarstellung (20) in die Displaydarstellung (30), und
- Ausgeben der Displaydarstellung (30) mit integrierter Videodarstellung an einen Fahrer des Fahrzeugs (1),
**dadurch gekennzeichnet, dass**
- die Videodarstellung in einem oberen Bereich (31) der Displaydarstellung (30) integriert wird, wobei der obere Bereich (31) einer Visualisierung eines Fernbereiches entspricht, und
- die Videodarstellung nahtlos und ohne perspektivische Verzerrung an die aus dem Umgebungsmodell berechnete Ansicht in einem unteren Bereich (32) der Displaydarstellung (30) angefügt wird, wobei der untere Bereich (32) einer Visualisierung eines Nahbereichs des Fahrzeugs entspricht,
- wobei Zusatzinformationen, beispielsweise ein Weg zu einem Parkplatz oder drohende Kollisionsobjekte, in die Displaydarstellung (30) integriert und nahtlos über beide Bereiche (31, 32) gelegt werden.

2. Verfahren nach Anspruch 1, **dadurch gekennzeichnet, dass** der Abstand zwischen Fahrzeug (1) und vorhandenen Hindernissen (6, 60, 61, 62, 63, 64, 65, 66) mittels passiven optischen Sensoren und/oder aktiven Sensorsystemen bestimmt wird.

3. Verfahren nach einem der vorhergehenden Ansprüche, **dadurch gekennzeichnet, dass** der Abstand zwischen Fahrzeug (1) und vorhandenen Hindernissen (6, 60, 61, 62, 63, 64, 65, 66) durch Berechnung aus Daten der Videokamera (2) bestimmt wird.

4. Verfahren nach einem der vorhergehenden Ansprüche, **dadurch gekennzeichnet, dass** die aktuelle Position des Fahrzeugs eine absolute Position oder eine zu einer bereits gespeicherten Position relative Position ist.

5. Verfahren nach einem der vorhergehenden Ansprüche, **dadurch gekennzeichnet, dass** die virtuelle Betrachterposition (3) vom Fahrer des Fahrzeugs (1) und/oder von einer Recheneinheit automatisch festgelegt wird.

6. Verfahren nach einem der vorhergehenden Ansprüche, **dadurch gekennzeichnet, dass** aktuelle Fahrparameter in die Displaydarstellung (30) integriert werden.

7. Vorrichtung zum Visualisieren der Umgebung eines Fahrzeuges, umfassend
- mindestens einen Sensor zum Bestimmen eines Abstands des Fahrzeugs zu Hindernissen (6, 60, 61, 62, 63, 64, 65, 66) in der Umgebung des Fahrzeugs (1),
- mindestens einen Sensor zum Bestimmen einer aktuellen Position des Fahrzeugs,
- eine Speichervorrichtung zum Speichern der Sensorsignale
- eine zumindest einen Teil der Umgebung aufnehmende Videokamera (2), und
- eine Rechenvorrichtung, die eingerichtet ist,
- ein zumindest zweidimensionales Umgebungsmodell aus den Sensorsignalen der Speichervorrichtung zu berechnen,
- eine Displaydarstellung (30) des Umgebungsmodells aus einer gewählten virtuellen Betrachterposition (3) zu berechnen, und
- eine mit der Videokamera (2) aufgenommene Videodarstellung (20) der Umgebung in die Displaydarstellung (30) zu integrieren, und
- eine Ausgabevorrichtung zum Visualisieren der Displaydarstellung (30),
**dadurch gekennzeichnet, dass**
- die Videodarstellung in einem oberen Bereich (31) der Displaydarstellung (30) integriert wird, wobei der obere Bereich (31) einer Visualisierung eines Fernbereiches entspricht, und
- die Videodarstellung nahtlos und ohne perspektivische Verzerrung an die aus dem Umgebungsmodell berechnete Ansicht in einem unteren Bereich (32) der Displaydarstellung (30) angefügt wird, wobei der untere Bereich (32) einer Visualisierung eines Nahbereichs des Fahrzeugs entspricht,
- wobei Zusatzinformationen, beispielsweise ein Weg zu einem Parkplatz oder drohende Kollisionsobjekte, in die Displaydarstellung (30) integriert und nahtlos über beide Bereiche (31, 32) gelegt werden.

8. Vorrichtung nach Anspruch 7, **dadurch gekennzeichnet, dass** der mindestens eine Sensor zum Bestimmen des Abstand zwischen Fahrzeug (1) und vorhandenen Hindernissen (6, 60, 61, 62, 63, 64, 65, 66) einen passiven optischen Sensor oder ein aktives Sensorsystem umfasst.

9. Vorrichtung nach einem der Ansprüche 7 bis 8, **dadurch gekennzeichnet, dass** der mindestens eine Sensor zum Bestimmen des Abstandes des Fahrzeugs (1) zu Hindernissen (6, 60, 61, 62, 63, 64, 65, 66) die Videokamera (2) umfasst.

10. Fahrzeug, umfassend eine Vorrichtung nach einem der Ansprüche 7 bis 9, das eingerichtet ist, ein Verfahren nach einem der Ansprüche 1 bis 6 durchzuführen.

## Claims

1. Method for visualizing surroundings of a vehicle (1), comprising the following steps:
- determining and storing a current distance between the vehicle (1) and existing obstacles (6, 60, 61, 62, 63, 64, 65, 66) in the surroundings of the vehicle by means of at least one sensor,
- determining and storing a current position of the vehicle,
- calculating an at least two-dimensional surroundings model from the stored data,
- calculating a display presentation (30) of the surroundings model from a selected virtual observer position (3),
- recording a video presentation of at least part of the surroundings by means of at least one video camera (2) and integrating the video presentation (20) into the display presentation (30), and
- outputting the display presentation (30) with the integrated video presentation to a driver of the vehicle (1),
**characterized in that**
- the video presentation is integrated into an upper area (31) of the display presentation (30), wherein the upper area (31) is consistent with a visualization of a far range, and
- the video presentation is added seamlessly and without perspective distortion to the view calculated from the surroundings model in a lower area (32) of the display presentation (30), wherein the lower area (32) is consistent with a visualization of a close range of the vehicle,
- wherein supplementary information, for example a distance from a parking space or imminent collision objects, is integrated into the display presentation (30) and seamlessly placed over the two areas (31, 32).

2. Method according to Claim 1, **characterized in that** the distance between the vehicle (1) and existing obstacles (6, 60, 61, 62, 63, 64, 65, 66) is determined by means of passive optical sensors and/or active sensor systems.

3. Method according to either of the preceding claims, **characterized in that** the distance between the vehicle (1) and existing obstacles (6, 60, 61, 62, 63, 64, 65, 66) is determined by calculation from data of the video camera (2).

4. Method according to one of the preceding claims, **characterized in that** the current position of the vehicle is an absolute position or a position relative to an already stored position.

5. Method according to one of the preceding claims, **characterized in that** the virtual observer position (3) is stipulated automatically by the driver of the vehicle (1) and/or by a computation unit.

6. Method according to one of the preceding claims, **characterized in that** current driving parameters are integrated into the display presentation (30).

7. Apparatus for visualizing the surroundings of a vehicle, comprising
- at least one sensor for determining a distance of the vehicle from obstacles (6, 60, 61, 62, 63, 64, 65, 66) in the surroundings of the vehicle (1),
- at least one sensor for determining a current position of the vehicle,
- a memory apparatus for storing the sensor signals,
- a video camera (2) recording at least part of the surroundings, and
- a computation apparatus configured
- to calculate an at least two-dimensional surroundings model from the sensor signals of the memory apparatus,
- to calculate a display presentation (30) of the surroundings model from a selected virtual observer position (3), and
- to integrate a video presentation (20) of the surroundings, recorded by means of the video camera (2), into the display presentation (30), and
- an output apparatus for visualizing the display presentation (30),
**characterized in that**
- video presentation is integrated in an upper area (31) of the display presentation (30), wherein the upper area (31) is consistent with a visualization of a far range, and
- the video presentation is added seamlessly and without perspective distortion to the view calculated from the surroundings model in a lower area (32) of the display presentation (30), wherein the lower area (32) is consistent with a visualization of a close range of the vehicle,
- wherein supplementary information, for example a distance from a parking space or imminent collision objects, is integrated into the display presentation (30) and seamlessly placed over the two areas (31, 32).

8. Apparatus according to Claim 7, **characterized in that** the at least one sensor for determining the distance between the vehicle (1) and existing obstacles (6, 60, 61, 62, 63, 64, 65, 66) comprises a passive optical sensor or an active sensor system.

9. Apparatus according to either of Claims 7 and 8, **characterized in that** the at least one sensor for determining the distance of the vehicle (1) from obstacles (6, 60, 61, 62, 63, 64, 65, 66) comprises the video camera (2).

10. Vehicle comprising an apparatus according to one of Claims 7 to 9, configured to perform a method according to one of Claims 1 to 6.

## Revendications

1. Procédé de visualisation de l'environnement d'un véhicule (1), comprenant les étapes suivantes :
- déterminer et mémoriser une distance actuelle entre le véhicule (1) et des obstacles présents (6, 60, 61, 62, 63, 64, 65, 66) dans le voisinage du véhicule au moyen d'au moins un capteur,
- déterminer et mémoriser une position actuelle du véhicule,
- calculer un modèle d'environnement au moins bidimensionnel à partir des données mémorisées,
- calculer une présentation d'affichage (30) du modèle d'environnement à partir d'une position d'observation virtuelle sélectionnée (3),
- recevoir une présentation vidéo d'au moins une partie de l'environnement au moyen d'au moins une caméra vidéo (2) et intégrer la présentation vidéo (20) dans la présentation d'affichage (30), et
- délivrer la présentation d'affichage (30) avec présentation vidéo intégrée à un conducteur du véhicule (1),
**caractérisé en ce que**
- la présentation vidéo est intégrée dans une région supérieure (31) de la présentation d'affichage (30), la région supérieure (31) correspondant à une visualisation d'une région éloignée, et
- la présentation vidéo est ajoutée de manière transparente et sans distorsion de perspective à la vue calculée à partir du modèle d'environnement dans une région inférieure (32) de la présentation d'affichage (30), la région inférieure (32) correspondant à une visualisation d'une région proche du véhicule,
- des informations supplémentaires, par exemple un chemin menant à un parc de stationnement ou des objets de collision imminente, étant intégrées à dans la présentation d'affichage (30) et étant placées de façon transparente sur les deux régions (31, 32).

2. Procédé selon la revendication 1, **caractérisé en ce que** la distance entre le véhicule (1) et les obstacles présents (6, 60, 61, 62, 63, 64, 65, 66) est déterminée au moyen de capteurs optiques passifs et/ou de systèmes de capteurs actifs.

3. Procédé selon l'une des revendications précédentes, **caractérisé en ce que** la distance entre le véhicule (1) et les obstacles présents (6, 60, 61, 62, 63, 64, 65, 66) est déterminée par le calcul à partir de données de la caméra vidéo (2).

4. Procédé selon l'une des revendications précédentes, **caractérisé en ce que** la position actuelle du véhicule est une position absolue ou une position par rapport à une position précédemment mémorisée.

5. Procédé selon l'une des revendications précédentes, **caractérisé en ce que** la position d'observateur virtuelle (3) est déterminée automatiquement par le conducteur du véhicule (1) et/ou par une unité de calcul.

6. Procédé selon l'une des revendications précédentes, **caractérisé en ce que** des paramètres de conduite actuels sont intégrés dans la présentation d'affichage (30).

7. Dispositif de visualisation de l'environnement d'un véhicule, le dispositif comprenant
- au moins un capteur destiné à déterminer une distance du véhicule à des obstacles (6, 60, 61, 62, 63, 64, 65, 66) dans l'environnement du véhicule (1),
- au moins un capteur destiné à déterminer une position actuelle du véhicule,
- un dispositif de mémorisation destiné à mémoriser les signaux de capteur,
- une caméra vidéo (2) enregistrant au moins une partie de l'environnement, et
- un dispositif de calcul adapté pour
- calculer un modèle d'environnement au moins bidimensionnel à partir des signaux de capteur du dispositif de mémorisation,
- calculer une présentation d'affichage (30) du modèle d'environnement à partir d'une position d'observateur virtuel sélectionnée (3), et
- intégrer une présentation vidéo (20) de l'environnement, enregistrée avec la caméra vidéo (2), dans la présentation d'affichage (30) et
- un dispositif de sortie destiné à visualiser la présentation d'affichage (30),
**caractérisé en ce que**
- la présentation vidéo est intégrée dans une région supérieure (31) de la présentation d'affichage (30), la région supérieure (31) correspondant à une visualisation d'une région éloignée, et
- la présentation vidéo est ajoutée de manière transparente et sans distorsion de perspective à la vue calculée à partir du modèle d'environnement dans une région inférieure (32) de la présentation d'affichage (30), la région inférieure (32) correspondant à une visualisation d'une région proche du véhicule,
- des informations supplémentaires, par exemple un chemin menant à un parc de stationnement ou des objets de collision imminente, étant intégrées dans la présentation d'affichage (30) et placées de façon transparente par-dessus les deux parties (31, 32).

8. Dispositif selon la revendication 7, **caractérisé en ce que** l'au moins un capteur destiné à déterminer la distance entre le véhicule (1) et les obstacles présents (6, 60, 61, 62, 63, 64, 65, 66) comprend un capteur optique passif ou un système de capteurs actif.

9. Dispositif selon l'une des revendications 7 et 8, **caractérisé en ce que** l'au moins un capteur destiné à déterminer la distance du véhicule (1) à des obstacles (6, 60, 61, 62, 63, 64, 65, 66) comporte la caméra vidéo (2).

10. Véhicule comprenant un dispositif selon l'une quelconque des revendications 7 à 9, qui est adapté pour mettre en oeuvre un procédé selon l'une des revendications 1 à 6.
